# EUROPÄISCHE PATENTSCHRIFT

(11) **EP 2 141 012 B1**
(45) Veröffentlichungstag und Bekanntmachung des Hinweises auf die Patenterteilung: **10.04.2013**
(21) Anmeldenummer: 09009975.5
(22) Anmeldetag: 03.08.2007
(51) Int. Cl.: B32B 5/26, B29C 70/22, D04H 3/04

(54) **Verfahren zur Optimierung des Transports eines multiaxialen Geleges während der Herstellung**
Method for optimising the transport of a multiaxial clutch during production
Procédé d'optimisation du transport d'une structure multiaxiale lors de la fabrication

(30) Priorität: 04.08.2006 DE 102006036866; 05.09.2006 DE 102006042047; 05.12.2006 DE 102006057633; 05.12.2006 DE 102006057634; 05.12.2006 DE 102006057635; 05.12.2006 DE 102006057636; 14.02.2007 DE 102007007919
(43) Veröffentlichungstag der Anmeldung: 06.01.2010
(62) Teilanmeldung aus: 07785685.4
(73) Patentinhaber: Fibraforce AG, 5453 Remetschwil (CH)
(72) Erfinder: Scholten, Friedhelm, 47198 Duisburg (DE); Szukat, Klaus, 03792 Parcent (ES)
(74) Vertreter: Demski, Siegfried

(56) Entgegenhaltungen:
- EP-A1- 1 693 496
- EP-A2- 0 768 167
- WO-A1-2007/098786

## Beschreibung

Die Erfindung betrifft ein Verfahren zur Herstellung eines multiaxialen Geleges, bevorzugt aus Kohlefaserstoffen, in welchem ein monoaxiales Gelege von mindestens einer Bevorratung um eine Wickelebene gewickelt wird, wobei die Wickelebene und die mindestens eine Bevorratung umeinander rotieren, um das monoaxiale Gelege um die Wickelebene zu wickeln und eine Vorrichtung zur Durchführung des erfindungsgemäßen Verfahrens.

Langfaserverstärkte Faserverbundbauteile sind ein wichtiges Anwendungsgebiet für technische Textilien. Aufbau und Struktur des Verstärkungstextiles bestimmen im Zusammenspiel mit der Herstellungstechnologie sowie dem verwendeten Matrixmaterial maßgeblich die Eigenschaft des späteren Verbundbauteils. Multiaxiale Gelege, auch MD- oder multidirektionale Gelege genannt, spielen dabei eine besondere Rolle, denn sie erlauben im Vergleich zu anderen Textilien Flächenkonstruktionen, die eine höhere Ausnutzung der spezifischen Eigenschaften der verwendeten Fasern bei gleichzeitiger Reduzierung der Herstellungs- und damit Bauteilkosten bieten.

Zur Herstellung von multiaxialen Gelegen wird auf verschiedene Techniken zurückgegriffen. Eine naheliegende Technologie ist der Rückgriff auf ein webähnliches Verfahren, in dem ein Schussfaden unter einem Winkel zur Erstreckungsrichtung der Gelegebahn gelegt wird. Dieses Verfahren ist jedoch langsam und erlaubt bei den feinen Fasern eine nur geringe Herstellungsgeschwindigkeit. Wesentlich schneller zur Herstellung hat sich ein Verfahren herausgestellt, in welchem uniaxiale Gelege, auch UD oder unidirektionale Gelege genannt, durch Wickeln um eine Ebene zu einem multiaxialen Gelege umgeformt werden.

In der Offenlegungsschrift DE 10 2005 000 115 A1 wird ein Verfahren zur Herstellung einer multidirektionalen Gelegebahn offenbart, wobei in diesem Verfahren um ein Gelege, dessen Fasern in Erstreckungsrichtung der Gelegebahn ausgerichtet sind, zwei weitere Bahnen mit einem Winkel zur Erstreckungsrichtung gewickelt werden, wobei ein multiaxiales Gelege entsteht. Dieses multiaxiale Gelege weist somit mindestens drei Schichten auf. Diese sind die beiden gegenüber liegenden Schichten des unter einem Winkel gewickelten Geleges und die sogenannte Null-Grad-Bahn, welche Fasern in Erstreckungsrichtung der Gelegebahn aufweist. Ein derartiges Gelege weist positive Eigenschaften in Bezug auf Zugfestigkeit auf.

Die japanische Patentanmeldung JP 2003 221771A betrifft ein Verfahren zur Herstellung einer multiaxialen Gelegebahn offenbart, in welchem ausschließlich die unter einem Winkel gewickelten Gelegebahnen um zwei etwa handbreite Bänder gewickelt werden, die in dem Gelege verbleiben. Durch dieses Verfahren entsteht ein multiaxiales Gelege, welches verstärkte Ränder aufweist. Die verstärkten Ränder haben einerseits den Vorteil, dass hierdurch das Gelege gerade an den Rändern eine hohe Zähigkeit oder eine hohe Stabilität aufweist, auf der anderen Seite hat dieses Gelege den Nachteil, dass durch die an den Rändern erhöhe Stärke des Materials das Material nicht stabil auf eine Rolle gewickelt werden kann und andererseits ist es hierdurch nicht möglich, gleichmäßige Schichtdicken eines faserverstärkten Kunststoffes aufzubauen, da die seitlichen Bänder das Gelege unnötig in seiner Stärke erhöhen.

Zur Herstellung von faserverstärkten Kunststoffen werden Gelege aus Fasern verwendet, die mit einem Kunststoff umgossen werden. Der Verbund aus Kunststoff und den Fasern verleiht dabei dem faserverstärkten Kunststoff eine hohe Stabilität gegenüber Zugspannung, wobei die Zugspannungsstabilität von der Ausrichtung der in dem Gelege vorhandenen Fasern abhängig ist. Faserverstärkte Kunststoffe werden vor allem dort eingesetzt, wo eine hohe Belastbarkeit in Kombination mit geringem Gewicht gefordert ist, wie beispielweise im Flugzeug- oder Schiffsbau. Um faserverstärkten Kunststoff mit einem möglichst geringen Gewicht auszustatten, ist es notwendig, die Menge des auf die Faser aufgetragenen Kunststoffes so gering wie möglich zu halten, wobei der Kunststoff die Fasern vollständig umschließen soll. Bei der Verwendung von gewebten Fasern trägt die Faserschicht im Vergleich zur Stärke der Fasern relativ stark auf und hat dadurch einen erhöhten Kunststoffanspruch, der zu einem faserverstärkten Kunststoffbauteil mit hoher Schichtdicke führt und daher ein hohes Gewicht aufweist. In der Praxis ist man daher dazu übergegangen, Gelege aus Fasermaterialien zu verwenden, in welchen die einzelnen Fasern gleichmäßig angeordnet sind und sich gegenseitig nicht überkreuzen, um damit eine Erhöhung der Schichtdicke des Fasermaterials und damit den Kunststoffanspruch des Fasermaterials möglichst gering zu halten. Da bekannt ist, dass der Kunststoff nur in der Faserrichtung eine hohe Zugfestigkeit aufweist, werden multiaxiale Gelege verwendet, in welchem die Fasern in mehreren Ebenen gelegt sind, wobei in jeder Ebene die Fasern eine Vorzugsrichtung aufweisen und sich gegenseitig nach Möglichkeit nicht überkreuzen. Das einfachste so hergestellte multiaxiale Gelege ist ein Gelege, in dem zwei Bahnen einer Faseranordnung überkreuzt übereinander gelegt werden. Derartige Gelege werden dadurch hergestellt, in dem entweder Teile einer Gelegebahn unter einem Winkel zur Bahn einzeln aneinander gelegt werden, wobei zunächst eine untere und darauf folgend eine obere Schicht aus einzelnen Teilen zusammengelegt wird. Hierbei werden einzelne, aus Parallelogrammen bestehende Einzelteile zu langen Bahnen zusammengelegt. Dieses Verfahren ist jedoch nicht geeignet, größere Mengen, so wie sie in industriellen Fertigungsprozessen benötigt werden, wirtschaftlich herzustellen.

In einem anderen Verfahren ist man daher dazu übergegangen, eine oder zwei Bahnen unter einem Winkel um eine Platte zu wickeln und den so entstandenen Wickel von einer Platte abzuziehen. Dieser Prozess kann kontinuierlich durchgeführt werden, wobei der Wickel von der Platte abgezogen und im Anschluss daran zu einem Gelege verdichtet wird. Ein derartiges Verfahren hat sich in der Praxis als schwer beherrschbar herausgestellt, vor allem, wenn wie im Fall von Kohlefasern, die Fasern ein nahezu fließendes Verhalten aufweisen. Dies bedeutet, dass die Fasern aufgrund ihres geringen Gewichtes und ihrer geringen Reibung auf Oberflächen leicht zusammenfallen und somit der Ausbildung einer gleichmäßig geformten Gelegebahn entgegenwirken. Je fluider das Verhalten eines Geleges, desto schwieriger ist dabei die Herstellung eines gleichmäßig geformten multiaxialen Geleges. Beim Wickeln um die Platte ist es erforderlich, dass das Gelege, das zu unterst auf der Platte liegt, beim kontinuierlichen Abziehen von der Platte nicht dazu neigt, dass die einzelnen Fasern von der Platte abrollen und somit einen Drall aufweisen, der nach dem Abziehen des Geleges dazu führt, dass sich die Fasern verkreuseln oder überkreuzen. Die Überkreuzung macht das Gelege qualitativ schlechter bis unbrauchbar im Vergleich mit einem gleichmäßig geformten multiaxialen Gelege, in welchem keine Überkreuzungen vorkommen. Das Abrollen der Fasern entsteht vor allem dann, wenn das Gelege vergleichsweise stark gespannt auf der Wickelplatte aufgewickelt wird. Wird das Gelege hingegen locker um die Platte gelegt, so haben die einzelnen Fasern die Möglichkeit, beim Abgleiten von der Platte einander zu überkreuzen oder Schleifen auszubilden. Auch dieses führt zu einem qualitativ schlechteren oder unbrauchbaren Ergebnis.

Aufgabe der Erfindung ist es ein Verfahren und eine Vorrichtung zur Verfügung zu stellen, welches beziehungsweise welche es ermöglicht, den Wickel aus Fasern von einer Platte abzuziehen, sodass ein gleichmäßig geformtes multiaxiales Gelege aus zwei Ebenen entsteht, wobei das Abziehen nicht zu Verwerfungen oder zu Verdrillungen der einzelnen Fasern eines monoaxialen Geleges führen soll.

Erfindungsgemäß wird die Aufgabe durch eine Schrägstellung der Längsachse der Wickelebene in Bezug auf die Schwerkraftrichtung gelöst. Die korrespondierende Vorrichtung zur Durchführung des erfindungsgemäßen Verfahrens zeichnet sich dadurch aus, dass die Wickelebene schräg in Bezug zur Schwerkraftrichtung ausgerichtet ist. Weitere vorteilhafte Ausgestaltungen der Verfahrens- und Vorrichtungserfindung ergeben sich aus den Unteransprüchen.

Durch eine Schrägstellung der Längsachse der Wickelebene in Bezug auf die Schwerkraftrichtung wird erreicht, dass die Fasern mit einem fluiden Verhalten und geringer Reibung auf der Oberfläche der Wickelebene durch die Schwerkraft von der Wickelebene abgleiten. Im Stand der Technik war bisher bekannt, den Wickel von einer in der Waagerechten befindlichen Wickelebene abzuziehen, die Wickelebene um eine waagerecht verlaufende Längsachse zu rotieren und die Wickelebene durch ein drittes monoaxiales Gelege, welches eine Faserausrichtung in Längsrichtung des herzustellenden multiaxialen Geleges aufweist, zur Verfügung zu stellen, wobei dieses Gelege mit senkrechter Längsachsenausrichtung, also in Schwerkraftrichtung, in der Vorrichtung zur Herstellung des multiaxialen Geleges verwendet wird.

Gegenüber den oben genannten Verfahren hat das erfindungsgemäße Verfahren den Vorteil, dass die Schrägstellung an das Gewicht und die tatsächliche Reibungskraft der Fasern auf der Wickelebene angepasst werden kann. Je nach Höhe der Reibungskraft kann die Wickelebene unter einem Winkel zur Schwerkraft angestellt werden, sodass im Idealfall eine gleichmäßige Gleitreibung zwischen der Faser und der Wickelebene entsteht, die zu einem gleichmäßigen Abgleiten des monoaxialen Geleges von der Wickelebene führt.

In einer Ausführungsform des erfindungsgemäßen Verfahrens und in der korrespondierenden Vorrichtung zur Durchführung des Verfahrens ist vorgesehen, dass die Wickelebene stationär gehalten ist. Hierbei kann die stationär gehaltene Wickelebene so angeordnet sein, dass die Längsachse der Wickelebene unter einem Winkel zur Schwerkraft ausgerichtet ist, wobei die Ober- und Unterfläche der Wickelebene senkrecht oder auch waagerecht ausgerichtet sein kann. Bei der senkrechten Ausrichtung der Ober- und Unterfläche der Wickelebene wirkt die Schwerkraft so, dass das monoaxiale Gelege vor allem durch eine obenliegende und schräg zur Richtung der Schwerkraft verlaufende Kante getragen wird. Dabei ist in vorteilhafter Weise der Winkel der Wickelebene so eingestellt, dass die gewickelten Fasern lotrecht in Richtung der Schwerkraft zeigen. Hierdurch wird gewährleistet, dass sich die Fasern von selbst richtig ausrichten und stets einen korrekten und gewünschten Winkel in dem herzustellenden monoaxialen Gelege aufweisen.

Bei einer Ausrichtung der Wickelebene, die zu einer Ausrichtung der Seitenkanten führt, deren Ebene senkrecht auf einer in allen Richtungen horizontal ausgerichteten Ebene steht, führt zu einer Wickelebene, deren Ober- und Unterfläche unter einem Winkel zur Schwerkraft ausgerichtet sind. Hierbei wird das monoaxiale Gelege auf der schrägen Ebene gewickelt und gleitet gleichmäßig von dieser schrägen Ebene herab. Auch hier ist es möglich, durch Feinstrukturierung der Oberfläche und durch Einstellung des Winkels der Wickelebene, die an der Längsachse in Bezug zur Schwerkraftrichtung gemessen wird, die Reibungskraft und den Anstellwinkel der Wickelebene aufeinander anzupassen, sodass das monoaxiale Gelege gleichmäßig von der Wickelebene abgleitet.

In einer alternativen Ausführungsform des erfindungsgemäßen Verfahrens und der dazu korrespondierenden Vorrichtung zur Durchführung des Verfahrens ist vorgesehen, dass die Platte nicht stationär gehalten wird, sondern um ihre eigene Längsachse rotiert. Eine Rotation um die Längsachse der Wickelebene, wobei die Wickelebene schräg zur Schwerkraftrichtung ausgerichtet ist und die schräge Ausrichtung gemessen wird an der Längsachse, die einen Winkel zur Schwerkraftrichtung bildet, ist es möglich, das Gelege von stationär gehaltenen Bevorratungen abzuwickeln, sodass das monoaxiale Gelege um die sich rotierende Wickelebene gewickelt wird. Dabei ist vorgesehen, dass der Winkel der Wickelebene so gewählt ist, dass auch hier die Reibungskraft des monoaxialen Geleges auf der Wickelebene und der Anstellwinkel miteinander korrespondieren, sodass das monoaxiale Gelege gleichmäßig von der Wickelebene abgleitet. Am Ende der Wickelebene ist eine Vorrichtung vorgesehen, die das multiaxiale Gelege von der Wickelebene abnimmt und aufrollt.

In vorteilhafter Ausgestaltung der Erfindung ist eine Wickelebene vorgesehen, die rotiert und eine Schrägstellung der Längsachse der Wickelebene in Bezug auf die Schwerkraft aufweist, wobei die Schrägstellung innerhalb einer Rotationsperiode von einem Minimalwinkel bis zu einem Maximalwinkel variiert. Hierdurch wird eine unterschiedliche Reibkraft ausgeglichen, die dadurch entsteht, dass das monoaxiale Gelege mal flächig auf der Wickelebene und mal flächig auf der Seitenkante der Wickelebene zuliegen kommt und dazwischen sowohl auf der Ober- und Unterfläche der Wickelebene zuliegen kommt und auch gleichzeitig auf der Seitenkante zuliegen kommt. Bei den verschiedenen Ausrichtungen der monoaxialen Gelege auf der Wickelebene ist es somit notwendig, den Anstellwinkel an die jeweils unterschiedlichen Reibkräfte durch die unterschiedlichen Stellungen der Wickelebene anzupassen. Durch die taumelnde Wickelebene wird außerdem erreicht, dass der Abwickelvorgang erleichtert wird und dass das monoaxiale Gelege durch die Kanten der Wickelebene gespannt und wieder gelockert wird. Auf diese Weise ist ein besonders gleichmäßiges Legen der monoaxialen Gelege auf der Wickelebene erreichbar.

In vorteilhafter Weise wird eine Schrägstellung von 5° bis 85° in Bezug auf die Schwerkraftrichtung gewählt, bevorzugt eine Schrägstellung von 20° bis 70° und ganz besonders bevorzugt ein Winkel von 30° bis 50°. Überraschender Weise hat sich gezeigt, dass in diesen Winkelintervallen allein durch die Schwerkraft das Gelege von der Wickelebene abgleitet und dabei ein hochgradig homogenes und gleichmäßiges multiaxiales Gelege bildet.

Die Erfindung wird anhand der folgenden Figur näher erläutert.

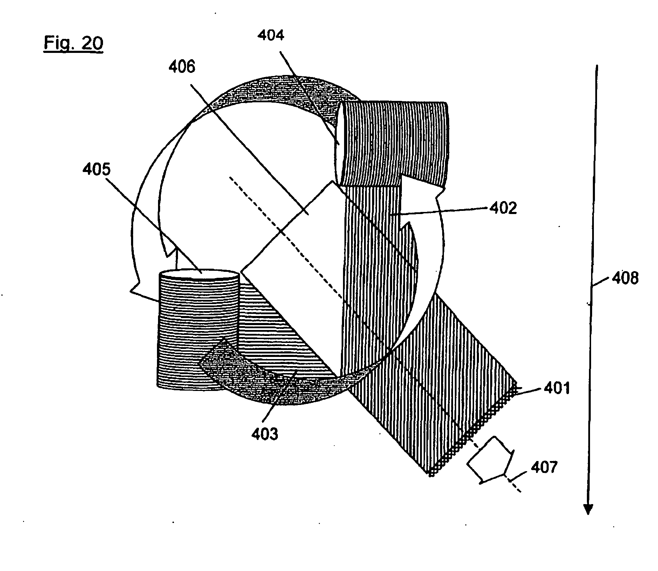

Es zeigt
- Fig. 20: eine Skizze zur Erläuterung des erfindungsgemäßen Verfahrens und der Vorrichtung zur Durchführung des erfindungsgemäßen Verfahrens.

In Figur 20 ist eine Skizze zur Verdeutlichung des Verfahrens zur Herstellung eines multiaxialen Geleges 401 dargestellt, in welchem ein monoaxiales Gelege 402 und 403 von mindestens einer Bevorratung 404 und 405 um eine Wickelebene 406 gewickelt wird. Die Wickelebene 406 und die beiden Bevorratungen 404und 405 rotieren umeinander. Erfindungsgemäß ist vorgesehen, dass sich die Bevorratungen 404 und 405 um die Wickelebene 406 drehen. Es ist aber auch möglich, dass die Bevorratungen 404 und 405 stationär gehalten werden und dass sich die Wickelebene 406 um ihre eigene Längsachse 407 dreht. Daneben ist es auch möglich, dass eine kombinierte Bewegung von Wickelebene 406 und den beiden Bevorratungen 404 und 405 vorgesehen ist. Bei der relativen Rotation der Bevorratung 404 und 405 und der Wickelebene 406 kommt das monoaxiale Gelege 402 und 403 auf je einer Seite der Wickelebene 406 zuliegen, wobei das monoaxiale Gelege 402 und 403 durch die Schrägstellung der Längsachse 407 in Relation zur Schwerkraftrichtung 408 von der Wickelebene 406 gleichmäßig abgleitet und so kann das multiaxiale Gelege 401 von der Wickelebene 406 abgezogen werden, ohne dass die Fasern des monoaxialen Geleges 402 und 403 an der Wickelebene 406 durch Haftreibung verkeilen und somit nicht zu einem gleichmäßigen multiaxialen Gelege 401 abgezogen werden können.

Die vorbeschriebenen Ausführungsbeispiele dienen der Erläuterung und sind nicht beschränkend.

### Bezugszeichenliste

- 401: Gelege
- 402: monoaxiales Gelege
- 403: monoaxiales Gelege
- 404: Bevorratung
- 405: Bevorratung
- 406: Wickelebene
- 407: Längsachse
- 408: Schwerkraftrichtung

## Patentansprüche

1. Verfahren zur Herstellung eines multiaxialen Geleges (401), bevorzugt aus Kohlefaserstoffen, in welchem ein monoaxiales Gelege (402, 403) von mindestens einer Bevorratung (404, 405) um eine Wickelebene (406) gewickelt wird, wobei die Wickelebene (406) und die mindestens eine Bevorratung (404, 405) umeinander rotieren, um das monoaxiale Gelege (402, 403) um die Wickelebene (406) zu wickeln,
**gekennzeichnet durch**
eine Schrägstellung der Längsachse (407) der Wickelebene (406) in Bezug auf die Schwerkraftrichtung (408).

2. Verfahren nach Anspruch 1,
**gekennzeichnet durch**
eine stationäre Wickelebene (406).

3. Verfahren nach einem der Ansprüche 1 oder 2,
**gekennzeichnet durch**
eine rotierende Wickelebene (406), wobei die Wickeleben (406) um die Längsachse (407) rotiert.

4. Verfahren nach einem der Ansprüche 1 bis 3,
**gekennzeichnet durch**
eine Schrägstellung von 5° bis 85° in Bezug auf die Schwerkraftrichtung (408), vorzugsweise 20° bis 70°, ganz besonders bevorzugt von 30° bis 50° in Bezug auf die Schwerkraftrichtung (408).

5. Verfahren nach einem der Ansprüche 1 bis 4,
**gekennzeichnet durch**
eine Variation der Schrägstellung während einer relativen Umdrehung von Wickelebene (406) und Bevorratung (404, 405), wobei der Winkel der Schrägstellung von 5° bis 85° variiert .

6. Vorrichtung zur Durchführung des Verfahrens nach einem der Ansprüche 1 bis 5, zur Herstellung eines multiaxialen Geleges (401), bevorzugt aus Kohlefasern, aufweisend mindestens eine Bevorratung (404, 405) für ein monoaxiales Gelege (402, 403) und eine Wickelebene (406), wobei die mindestens eine Bevorratung (404, 405) und die Wickelebene (406) umeinander rotieren und dabei das monoaxiale Gelege (402, 403) von der mindestens einen Bevorratung (404, 405) um die Wickelebene (406) wickeln,
**dadurch gekennzeichnet,**
**dass** die Wickelebene (406) schräg in Bezug zur Schwerkraftrichtung (408) ausgerichtet ist.

7. Vorrichtung nach Anspruch 6,
**dadurch gekennzeichnet,**
**dass** die Wickelebene (406) stationär gehalten ist.

8. Vorrichtung nach einem der Ansprüche 6 und 7,
**dadurch gekennzeichnet,**
**dass** die Wickelebene (406) um ihre eigene Längsachse (407) rotiert.

9. Vorrichtung nach einem der Ansprüche 6 bis 8,
**dadurch gekennzeichnet,**
**dass** eine Schrägstellung von 5° bis 85° in Bezug auf die Schwerkraftrichtung (408), vorzugsweise 20° bis 70°, ganz besonders bevorzugt von 30° bis 50° in Bezug auf die Schwerkraftrichtung (408) erfolgt.

10. Vorrichtung nach einem der Ansprüche 1 bis 9,
**dadurch gekennzeichnet,**
**dass** eine Variation der Schrägstellung während einer relativen Umdrehung von Wickelebene (406) und Bevorratung (404, 405) erfolgt, wobei der Winkel der Schrägstellung von 5° bis 85° variiert.

## Claims

1. Method for the manufacture of a multiaxial fabric (401), preferably of carbon fibres, in which a monoaxial fabric (402, 403) is wound from at least one storage (404, 405) around a winding plane (406), wherein the winding plane (406) and the at least one storage (404, 405) rotate around each other to wind the monoaxial fabric (402, 403) around the winding plane (406),
**characterized by**
an inclination of the longitudinal axis (407) of the winding plane (406) with respect to the direction of gravity (408).

2. Method according to claim 1,
**characterized by**
a stationary winding plane (406).

3. Method according to one of claims 1 or 2,
**characterized by**
a rotating winding plane (406), wherein the winding plane (406) rotates around the longitudinal axis (407).

4. Method according to one of claims 1 to 3,
**characterized by**
an inclination of 5° to 85° with respect to the direction of gravity (408), preferably 20° to 70°, particularly preferred 30° to 50°, with respect to the direction of gravity (408).

5. Method according to one of claims 1 to 4,
**characterized by**
a variation of the inclination during a relative rotation of the winding plane (406) and the storage (404, 405), wherein the angle of inclination varies from 5° to 85°.

6. Device for carrying out the method according to one of claims 1 to 5 for the manufacture of a multiaxial fabric (401), preferably of carbon fibres, comprising at least one storage (404, 405) for a monoaxial fabric (402, 403) and a winding plane (406), wherein the at least one storage (404, 405) and the winding plane (406) rotate around each other and in the process wind the monoaxial fabric (402, 403) from the at least one storage (404, 405) around the winding plane (406),
**characterized in that**
the winding plane (406) is oriented diagonally with respect to the direction of gravity (408).

7. Device according to claim 6,
**characterized in that**
the winding plane (406) is held stationarily.

8. Device according to one of claims 6 and 7,
**characterized in that**
the winding plane (406) rotates about its own longitudinal axis (407).

9. Device according to one of claims 6 to 8,
**characterized in that**
an inclination of 5° to 85° with respect to the direction of gravity (408), preferably 20° to 70°, particularly preferred of 30° to 50° with respect to the direction of gravity (408) is effected.

10. Device according to one of claims 1 to 9,
**characterized in that**
a variation of the inclination during a relative rotation of the winding plane (406) and the storage (404, 405) is effected, wherein the angle of inclination varies from 5° to 85°.

## Revendications

1. Procédé de fabrication d'une structure multiaxiale (401), préférentiellement constituée de matériaux en fibres de carbone, dans lequel une structure monoaxiale (402, 403) d'au moins un stockage (404, 405) est enroulée autour d'un plan d'enroulement (406), le plan d'enroulement (406) et l'au moins un stockage (404, 405) tournant l'un autour de l'autre pour enrouler la structure monoaxiale (402, 403) autour du plan d'enroulement (406),
**caractérisé par**
une position inclinée de l'axe longitudinal (407) du plan d'enroulement (406) par rapport au sens de la gravité (408).

2. Procédé selon la revendication 1,
**caractérisé par**
un plan d'enroulement (406) fixe.

3. Procédé selon l'une des revendications 1 ou 2,
**caractérisé par**
un plan d'enroulement (406) rotatif, le plan d'enroulement (406) tournant autour de l'axe longitudinal (407).

4. Procédé selon l'une des revendications 1 à 3,
**caractérisé par**
une position inclinée de 5° à 85° par rapport au sens de la gravité (408), préférentiellement de 20° à 70°, très préférentiellement de 30° à 50° par rapport au sens de la gravité (408).

5. Procédé selon l'une des revendications 1 à 4,
**caractérisé par**
une variation de la position inclinée pendant une rotation relative du plan d'enroulement (406) et du stockage (404, 405), l'angle de la position inclinée variant de 5° à 85°.

6. Dispositif destiné à la réalisation du procédé selon l'une des revendications 1 à 5, pour la fabrication d'une structure multiaxiale (401), préférentiellement constituée de fibres de carbone, présentant au moins un stockage (404, 405) pour une structure monoaxiale (402, 403) et un plan d'enroulement (406), l'au moins un stockage (404, 405) et le plan d'enroulement (406) tournant l'un autour de l'autre et la structure monoaxiale (402, 403) de l'au moins un stockage (404, 405) s'enroulant ainsi autour du plan d'enroulement (406),
**caractérisé par**
**le fait que** le plan d'enroulement (406) est orienté incliné par rapport au sens de la gravité (408).

7. Dispositif selon la revendication 6,
**caractérisé par**
**le fait que** le plan d'enroulement (406) est maintenu fixe.

8. Dispositif selon l'une des revendications 6 et 7,
**caractérisé par**
**le fait que** le plan d'enroulement (406) tourne autour de son propre axe longitudinal (407).

9. Procédé selon l'une des revendications 6 à 8,
**caractérisé par**
**le fait qu'**une position inclinée s'effectue de 5° à 85° par rapport au sens de la gravité (408), préférentiellement de 20° à 70°, très préférentiellement de 30° à 50° par rapport au sens de la gravité (408).

10. Procédé selon l'une des revendications 1 à 9,
**caractérisé par**
**le fait qu'**une variation de la position inclinée s'effectue pendant une rotation relative du plan d'enroulement (406) et du stockage (404, 405), l'angle de la position inclinée variant de 5° à 85°.
